# EUROPÄISCHE PATENTSCHRIFT

(11) **EP 0 965 157 B1**
(45) Veröffentlichungstag und Bekanntmachung des Hinweises auf die Patenterteilung: **06.02.2002**
(21) Anmeldenummer: 98916892.7
(22) Anmeldetag: 06.03.1998
(51) Int. Cl.: H02G 11/02, B65H 75/38

(54) **VORRICHTUNG ZUR AUFNAHME BZW. ZUM VERSTAUEN EINES KABELS**
DEVICE FOR TAKING-UP OR STOWING A CABLE
DISPOSITIF PERMETTANT DE RECEVOIR ET DE LOGER UN CABLE

(30) Priorität: 06.03.1997 DE 29704035 U
(43) Veröffentlichungstag der Anmeldung: 22.12.1999
(73) Patentinhaber: Manfred Fladung GmbH, 63776 Mömbris (DE)
(72) Erfinder: FLADUNG, Manfred, D-63776 Mömbris (DE)
(74) Vertreter: Stoffregen, Hans-Herbert, Dr. Dipl.-Phys.
(86) Internationale Anmeldenummer: EP9801309
(87) Internationale Veröffentlichungsnummer: WO9839829

(56) Entgegenhaltungen:
- WO-A-86/07209
- DE-A- 3 113 444
- DE-A- 3 443 932
- GB-A- 2 095 209

## Beschreibung

Die Erfindung bezieht sich auf eine Vorrichtung zur Aufnahme bzw. zum Verstauen eines mehrere Adern umfassenden Kabels mit einer um eine Achse drehbare Aufwickeltrommel zur Aufnahme des Kabels, dessen Adern mit einer ersten Anschlusseinrichtung verbunden sind, über die ein elektrisch leitender Anschluss zu Leitungen einer Versorgungsanlage erfolgt und die mit der Aufwickeltrommel verbunden ist und auf koaxial zur Trommelachse verlaufenden Kreisen angeordnete, mit den Adern des Kabels verbundene erste elektrische Kontakte aufweist, wobei die zur Versorgungsanlage führenden elektrischen Leitungen mit einer zweiten Anschlusseinrichtung verbunden sind, die zweite elektrische Kontakte aufweist, die bei stillstehender Aufwickeltrommel mit den ersten elektrisch leitenden Kontakten in elektrisch leitender Verbindung sind.

Eine Vorrichtung der vorstehend beschriebenen Art ist aus der DE-A-31 13 444 bekannt. Diese bekannte Vorrichtung enthält zwei Schleifkontakt-Paare. Jedes Schleifkontakt-Paar besteht aus zwei Kontaktscheiben, von denen die eine eben ist und die andere eine Erhebung aufweist, die federnd gegen die erste Kontaktscheibe angedrückt ist. Die Schleifkontakt-Paare sind jeweils auf Flanschpaaren angeordnet. Jeweils einer der beiden Flansche ist raumfest an einer Nabe eines raumfesten Gehäusekörpers befestigt, während der andere Flansch an der um die Nabe drehbaren Aufwickeltrommel angeordnet ist. Die beiden Flansche eines Flanschpaares sind in einem konstanten Abstand zueinander angeordnet.

Bekannt ist auch eine Aufwickeltrommel für ein elektrisches Kabel, das von Hand ausziehbar und durch einen elektrischen Motorantrieb auf die Trommel aufwickelbar ist. Die Aufwickeltrommel weist eine im Trommelinneren angeordnete ringfömige Wand auf, die auf dem Gehäuse des Motors angeordnet ist. Die Wand trägt drei Schleifringe, die eingebettet in die Wand, konzentrisch zur Drehachse des Motors angeordnet sind. Ein Kontaktblock hat drei Gleitkontakte, die gleitend gehalten und jeweils gegen einen der Schleifringe angedrückt sind (WO-A-8607209). Andere Vorrichtungen zur Aufnahme bzw. zum Verstauen eines mehrere Adern umfassenden Kabels sind zum Beispiel der EP-B-0 532 212 oder der EP-B-0 163 025 zu entnehmen. Bei der zuerst genannten Verstauvorrichtung wird das Kabel auf einen hohlzylinderischen Trägerkörper einlagig aufgewickelt, der seinerseits um eine mit der Mittelachse des Körpers zusammenfallende Achse über z.B. einen Getriebemotor drehbar ist. Innerhalb der Aufwickeltrommel verläuft ein Ausgleichskabel, um die Verbindung zu einem Festanschluss der versorgungsanlage zu ermöglichen. Das Ausgleichskabel wird dabei mehr oder weniger verdrillt. Die hierdurch normalerweise auftretende Belastung des Versorgungskabels wird dadurch reduziert, dass dieses innerhalb des Drehkörpers in zwei vorzugsweise gleichlange Abschnitte unterteilt wird, wodurch eine Aufteilung der Verdrillung erfolgt. Bei der Verstauvorrichtung nach der EP-B- 0 163 025 umfasst die Aufwickelrolle zwei Trommelscheiben, zwischen denen das Anschlusskabel im aufgewickeltem Zustand liegt. Der Abstand zwischen den beiden Trommelscheiben ist auf den Durchmesser des Anschlusskabels derart abgestimmt, dass sich die aufgewickelten Lagen in einer Ebene nebeneinander befinden. Die Aufwickeltrommel selbst, die vorzugsweise unter einer Fahrgastbrücke anordbar ist, weist eine vertikal verlaufende Drehachse auf. Die Verbindung zwischen dem Anschlusskabel und einem Festanschluss in Form eines Ausgleichskabels verläuft spiralförmig in einem domförmigen Gehäuseabschnitt, wobei zur Vermeidung eines Brechens der Adern diese freigelegt sind. Die Adern bilden quasi einen "Quirl", der in Abhängigkeit von dem auf- bzw. abgewickelten Zustand des Anschlusskabels bei gleichzeitiger Verdrillung stärker oder schwächer spiralförmig verdreht ist.

Der vorliegenden Erfindung liegt das Problem zugrunde, eine Vorrichtung der eingangs genannten Art so weiterzubilden, dass bei der Drehung der Aufwickeltrommel während des Auf- oder Abwickelns des Kabels keine elektrisch leitende Verbindung zwischen den elektrischen Kontakten der ersten Anschlussvorrichtung und den elektrischen Kontakten der zweiten Anschlussvorrichtung vorhanden ist.

Die Aufgabe wird bei einer Vorrichtung der eingangs beschriebenen Art erfindungsgemäß dadurch gelöst, dass die zweite elektrische Anschlusseinrichtung bei sich drehender Aufwickeltrommel axial entlang der Trommelachse verschoben im Abstand zu der ersten elektrischen Anschlusseinrichtung bei voneinander getrennten ersten und zweiten elektrischen Kontakten verläuft und dass die zweite elektrische Antriebseinrichtung nach dem Stillstand der Aufwickeltrommel in Richtung der ersten Aufwickeltrommel verschiebbar ist.

Dadurch, dass die erste elektrische Anschlusseinrichtung zusammen mit der Trommel gedreht wird, können das mehrere Adern aufweisende Versorgungskabel bzw. dessen mehrere Adern unverdrillt zwischen dem inneren Ende des auf der Aufwickeltrommel auf- bzw. abwickelbaren Kabels und der Anschlusseinrichtung geführt werden. Somit ist die Gefahr des Brechens von Kabeln ausgeschlossen. Sobald die Trommel nicht mehr gedreht wird, wird die zweite elektrische Anschlusseinrichtung entlang der Trommelachse axial verschoben, um dessen elektrische Kontakte mit denen der ersten Anschlusseinrichtung in elektrisch leitende Verbindung zu bringen. Sodann kann eine Signal- bzw. Stromübertragung über die Adern erfolgen. Dadurch, dass erst dann, wenn die ersten und zweiten elektrischen Kontakte in leitender Verbindung stehen, ein Strom fließt, ist sichergestellt, dass durch Funkenbildung eine Zerstörung der Kontakte ausgeschlossen ist. Da während der Strom- bzw. Signalübertragung eine Relativbewegung zwischen den ersten und zweiten elektrischen Kontakten nicht erfolgt, können diese mit dem erforderlichen Druck beaufschlagt werden, um unerwünschte Übergangswiderstände auszuschließen.

Mit anderen Worten ist vorgesehen, dass bei sich drehender Trommel die zweite elektrische Anschlusseinrichtung beabstandet zu der ersten elektrischen Anschlusseinrichtung verläuft. Steht dagegen die Trommel still, so wird die zweite elektrische Anschlusseinrichtung mittels z.B. eines Elektromotors, eines Spindelantriebs oder eines Hubmagneten entlang der Trommelachse auf einer Welle in Richtung der mit der Trommel verbundenen ersten elektrischen Anschlusseinrichtung verschoben, wobei bei in elektrisch leitender Verbindung stehenden ersten und zweiten elektrischen Kontakten eine Strom- bzw. Signalübertragung erfolgt.

Hierzu können Sensoren wie Schalter vorgesehen sein, über die überprüft wird, ob die ersten und zweiten elektrischen Kontakte in leitender Verbindung stehen oder nicht.

Sofern ein Spindelantrieb zum axialen Verstellen der zweiten elektrischen Anschlusseinrichtung benutzt wird, kann der Spindelgang so gewählt werden, dass die zweite elektrische Anschlusseinrichtung durch Selbsthemmung in Kontakt zu der ersten elektrischen Anschlusseinrichtung gehalten wird.

Vorzugsweise wird mittels eines Elektromotors ein die Welle der Trommel umgebender ein Außengewinde aufweisender Hohlzylinder gedreht, in der sich seinerseits eine von einer scheibenartigen Halterung der zweiten elektrischen Anschlusseinrichtung ausgehende Hülse erstreckt. Wird der axial auf der Welle nicht verschiebbare Hohlzylinder gedreht, so verschiebt sich die Hülse und damit die zweite elektrische Anschlußeinrichtung entlang der Welle. Eine rein translatorische Bewegung ist durch eine Verdrehsicherung gewährleistet, die ortsfest von der Welle ausgeht, und zwar vorzugsweise von einer scheibenartigen Halterung des Motors.

Sofern die Trommel einen hohlzylinderischen Trägerkörper für das auf- bzw. abwickelbare Kabel aufweist, ist vorgesehen, dass innerhalb des Trägerkörpers die zweite elektrische Anschlusseinrichtung verschiebbar angeordnet ist. Die erste und die zweite elektrische Anschlusseinrichtung können innerhalb des Trägerkörpers angeordnet sein.

Auch besteht die Möglichkeit, dass die erste elektrische Anschlusseinrichtung von einer senkrecht von dem Kabel aufgespannten Ebene abragt und sich drehbar entlang der Drehachse innerhalb einer ortsfesten Halterung wie domartigem Aufsatz erstreckt, innerhalb der bzw. dem die zweite elektrische Anschlusseinrichtung axial verschiebbar angeordnet ist.

Um unabhängig von der radialen Stellung zwischen der ersten und zweiten Anschlusseinrichtung den erforderlichen Kontakt sicherzustellen, sind die ersten oder zweiten elektrischen Kontakte Kontaktstifte und die zweiten oder ersten elektrischen Kontakte Kontaktringe. Dabei sind die Kontaktstifte vorzugsweise federvorgespannte Stifte, insbesondere Messingstifte.

Die Kontaktstifte gehen vorzugsweise von der ersten Anschlusseinrichtung aus, die mit der Trommel drehbar ist.

Die erste und/oder die zweite elektrische Anschlusseinrichtung weist ein aus Isoliermaterial bestehendes, vorzugsweise eine Zylinderform aufweisendes Gehäuse auf, dessen Frontfläche die ersten bzw, die zweiten elektrischen Kontakte aufweist. Sofern die elektrisch leitenden Kontakte als Kontaktringe ausgebildet sind, verlaufen diese zurückversetzt zur Oberfläche der Stirnfläche und sind durch Stege untereinander beabstandet, die ihrerseits zur Einführhilfe der Kontaktstifte außenrandseitig angefast sind.

Um die Stellung der Kontakte zueinander, insbesondere ob diese in elektrisch leitender Verbindung stehen, zu überprüfen, ist einem ersten und/oder einem zweiten elektrischen Kontakt zumindest ein Sensor wie Schalter zugeordnet. Dabei kann der Schalter ein Kontaktschalter sein, der von einer die Frontflächen der Gehäuse der Anschlusseinrichtungen ausgeht und durch die andere Frontfläche bzw. einem von dieser ausgehenden Element wie einem elektrisch leitenden Kontakt betätigbar ist.

Auch besteht die Möglichkeit, die axiale Verstellung der zweiten Anschlusseinrichtung über zumindest einen Endschalter zu steuern.

Ist die erfindungsgemäße Vorrichtung insbesondere für Bordnetzversorgungsanlagen von Flugzeugen bestimmt, so ist ein Einsatz und eine Verwendung für sonstige Stromverbindungen geeignet.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Seitenansicht eines Kopfs einer teleskopierbaren Fluggastbrücke mit einer Vorrichtung zum Verstauen eines Anschlusskabels einer zentralen Bordnetzversorgungsanlage,
- Fig. 2: einen Längsschnitt durch die in Fig. 1 dargestellte Vorrichtung im Bereich der Verstauvorrichtung,
- Fig. 3: eine Schnittdarstellung einer weiteren Ausführungsform einer Verstauvorrichtung,
- Fig. 4: eine Vorderansicht einer mit der Verstauvorrichtung verbundenen elektrischen Anschlusseinrichtung,
- Fig. 5: eine Vorderansicht einer Anschlusseinrichtung, von der elektrische Leiter zu einer Versorgungsanlage führen,
- Fig. 6: eine Schnittdarstellung durch eine als Trommel ausgebildete Verstauvorrichtung und
- Fig. 7: eine Detaildarstellung der Fig. 6.

In den Fig. soll die Erfindung anhand eines Anschlusskabels einer zentralen Bordnetzversorgungsanlage für Flugzeuge erläutert werden, ohne dass hierdurch eine Einschränkung der Erfindung erfolgt. Vielmehr ist die erfindungsgemäße Lehre überall dort einsetzbar, wo insbesondere dicke Kabel auf- bzw. abgewickelt und mit ihrem verstauseitigen Ende über einen Festanschluss mit einer Versorgungsanlage verbunden werden sollen, ohne dass Anschlusskabel erforderlich sind, die verdrillt werden, bzw. eine Stromübertragung erfolgt, die grundsätzlich über Schleifringe möglich wäre.

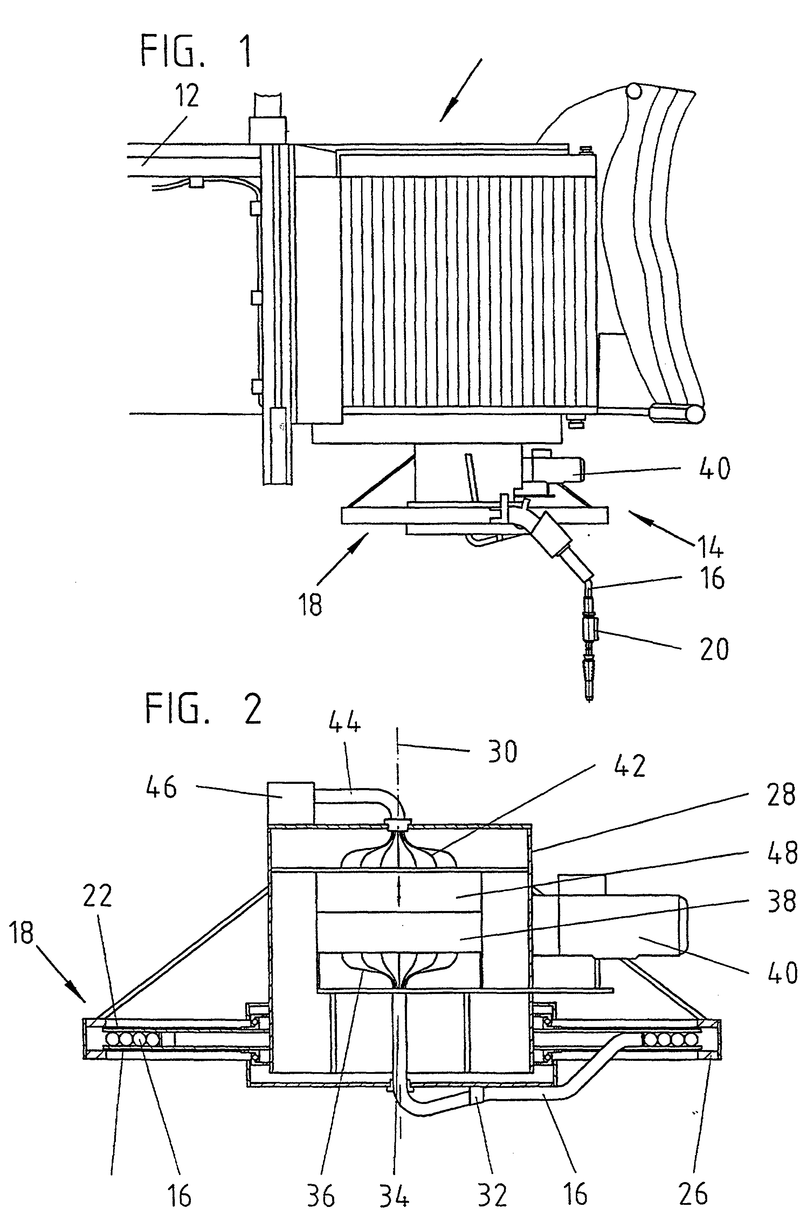

In Fig. 1 ist der Kopf 10 einer teleskopierbaren Fluggastbrücke 12 dargestellt. An der Unterseite des Kopfes 10 ist eine Vorrichtung 14 zum Verstauen eines Anschlusskabels 16 einer zentralen Bordnetzversorgungsanlage für Flugzeuge befestigt. Das Anschlusskabel 16 umfasst einen auf eine Aufwickeltrommel 18 auf- bzw. abwickelbaren Abschnitt. An seinem freien Ende weist das Anschlusskabel 16 einen vorzugsweise als Panel ausgebildeten Stecker 20 auf, der in eine entsprechende Steckeraufnahme am Flugzeug gesteckt werden kann.

Im Ausführungsbeispiel der Fig. 1 und 2 besteht die Aufwickeltrommel 18 aus zwei parallel zueinander verlaufenden Trommelscheiben 22, 24, zwischen denen das Anschlusskabel 16 einlagig im aufgewickelten Zustand liegt. Der Abstand zwischen den Trommelscheiben 22, 24 ist auf den Durchmesser des Anschlusskabels 16 abgestimmt.

Die Trommelscheiben 22, 24 sind in einem Gehäuse 26 mit einem domartigen Abschnitt 28 gelagert. Der domartige Abschnitt 28 erstreckt sich senkrecht von der von den Trommelscheiben 22, 24 aufgespannten Ebenen entlang der Drehachse 30 der Trommelscheiben 22, 24.

Das Anschlusskabel 16 geht - gegebenenfalls über eine Halterung 32 - in einen entlang der Drehachse 30 und innerhalb des domartigen Gehäuses 28 verlaufenden Abschnitt 34 über. Entlang des Abschnitts 34 werden deren Adern 36 freigelegt, um mit ersten elektrischen Kontakten in einer ersten elektrischen Anschlusseinrichtung 38 verbunden zu werden, die sich mit der Trommel 18 dreht, die über einen außen am Gehäuse 28 angeordneten Motor wie Getriebemotor 40 betätigbar ist. Selbstverständlich kann auch bei kleineren Trommeln eine manuelle Betätigung erfolgen.

Das Anschlusskabel 16 wird mit den Leitungen bzw. Adern 42 eines Verbindungskabels 44 verbunden, das über einen Anschlusskasten 46 zu einer zentralen Versorgungsanlage führt. Hierdurch können über die Adern 42, 36 Strom fließen bzw. Signale übertragen werden. So kann es sich bei den Adern 42, 36 um Leitungen, die einzelnen Phasen eines 400-Hz-Drehstroms zugeordnet sind, bzw. um Steuerleitung handeln. Beispielhaft können z.B. 7 Adern für Starkstrom und mindestens 6 Adern für Steuerleitungen vorgesehen sein.

Die von dem Verbindungskabel 44 ausgehenden Adern bzw. Leitungen 42 münden ihrerseits in einer zweiten elektrischen Anschlusseinrichtung 48, die entlang der Drehachse 30 axial verstellbar ist, um dann, wenn die Kabeltrommel 18 stillsteht, in Richtung der ersten die Adern 36 des Anschlusskabels 16 aufnehmenden ersten Anschlusseinrichtung 38 verschoben zu werden. Hierdurch wird die erforderliche elektrische Verbindung hergestellt. Hierzu sind in der zweiten elektrischen Anschlusseinrichtung 48 zweite elektrische Kontakte vorgesehen, die mit den Adern 42 verbunden sind.

Mit anderen Worten wird die elektrisch leitende Verbindung zwischen dem zu einer Versorgungsanlage führenden Kabel 44 und dem auf- bzw. abwickelbaren Kabel 16 über eine mit der Trommel 18 drehbare erste Anschlusseinrichtung 38 und eine zweite elektrischen Anschlusseinrichtung 48 hergestellt, die axial in dem domartigen Aufsatz 28 des Gehäuses, in dem die Trommel 18 drehbar ist, verschiebbar ist. Dieses Verschieben entlang der Drehachse 30 sollte jedoch nur dann erfolgen, wenn die Kabeltrommel 18 stillsteht In diesem Fall kann die zweite elektrische Anschlusseinrichtung 48 in Richtung der ersten Anschlusseinrichtung 38 verstellt werden. Dies kann z.B. über einen Spindelantrieb, über Hubmagnete, Elektromotor mit kämmenden Zahnrädern und ineinandergreifenden Gewinden oder sonstige geeignete Mittel geschehen.

Die Anschlusseinrichtungen 38, 48 weisen jeweils vorzugsweise ein aus Kunststoff bestehendes zylinderisches Gehäuse auf, dessen einander zugewandten Stirnflächen 52, 58 die notwendigen elektrischen Kontakte, die mit den Adern 36 bzw. 42 verbunden sind, aufweisen.

So können die Adern 36 des Anschlusskabels 16 in Kontaktringe 50 übergehen, die koaxial zur Drehachse 30 der Trommel 18 verlaufen. Die Kontaktringe 50 sind dabei zurückversetzt zur Oberfläche des aus Isoliermaterial bestehenden Gehäuses der Anschlusseinrichtung 38 angeordnet. Die zwischen den Kontaktringen 50 verlaufenden Stege 54 sind endseitig angefast.

Die ebenfalls ein aus Kunststoff bestehendes zylinderisches Gehäuse aufweisende zweite Anschlusseinrichtung 48 weist federvorgespannte Kontaktstifte 56 auf, die mit den Adern 42 der Verbindungskabel 44 verbunden sind. Die Kontaktstifte 56 befinden sich auf koaxial zur Drehachse 30 der Trommel 18 verlaufenden Kreise, die mit denen der Kontaktringe 50 übereinstimmen. Auf diese Weise ist hergestellt, dass dann, wenn die zweite Anschlusseinrichtung 48 zu der ersten Anschlusseinrichtung 38 herangefahren ist, der erforderliche elektrische Kontakt zwischen den Kontaktstiften 56 und den Kontaktringen 50 gegeben ist.

Ferner kann von der von den. Kontaktstiften 56 durchsetzten Frontfläche 58 des Gehäuses der axial verschiebbaren Anschlusseinrichtung 48 ein Kontaktstift ausgehen, über den festgestellt wird, ob der erforderliche Kontakt zwischen den Kontaktstiften 56 und den Kontaktringen 50 gegeben ist. Erst bei Vorliegen eines entsprechenden Signals wird der Strom über das Verbindungskabel 44 zum Anschlusskabel 16 geleitet.

Da beim Annähern bzw. Entfernen der axial verschiebbaren Anschlusseinrichtung 48 zu der sich drehenden Anschlusseinrichtung 38 eine Spannung nicht anliegt, ist sichergestellt, dass eine zur Zerstörung führende Funkenbildung ausgeschlossen ist.

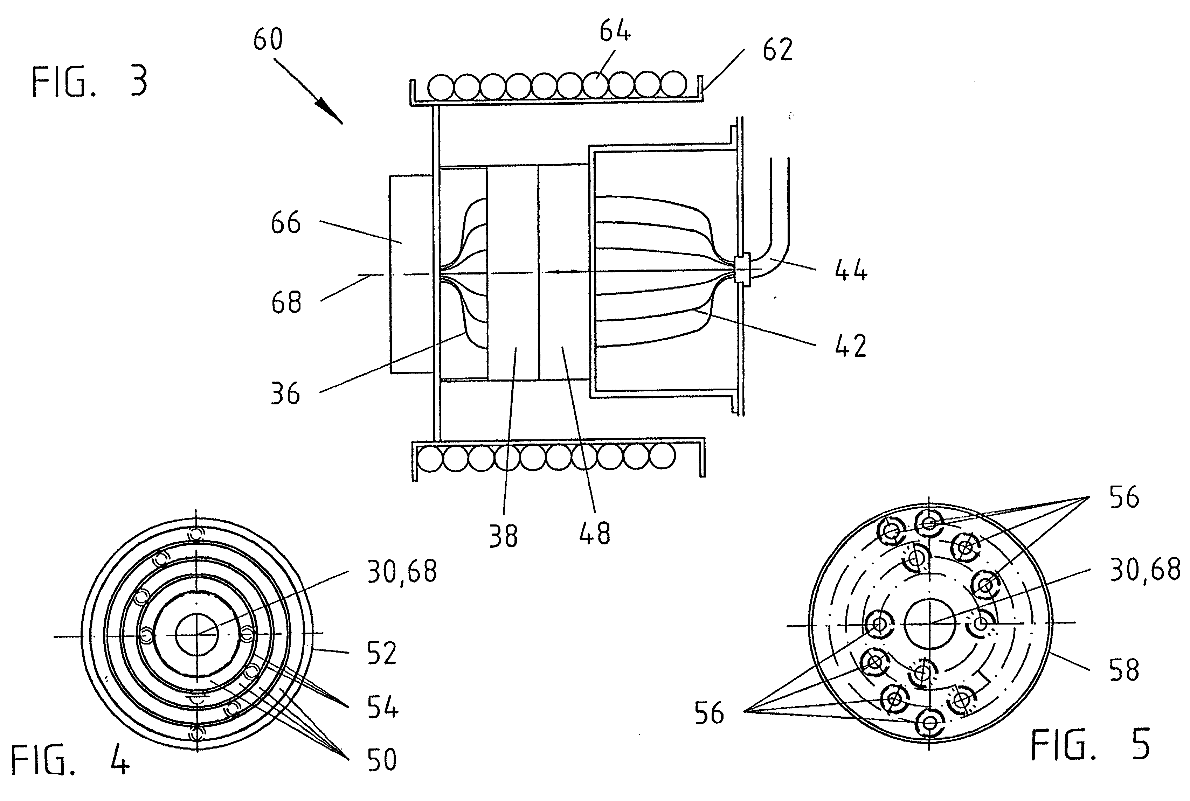

Eine alternative Ausführungsform einer Verstauvorrichtung 60 ist der Fig. 3 zu entnehmen, die jedoch in Bezug auf die Anschlusseinrichtungen 38 und 48 mit denen der Fig. 1 und 2 übereinstimmt, so dass insoweit für gleiche Elemente gleiche Bezugszeichen benutzt worden sind.

Die Verstauvorrichtung 60 umfasst einen hohlzylinderischen Trägerkörper 62, auf dem einlagig ein Anschlusskabel 64 auf- bzw. abwickelbar ist. Dieses Anschlusskabel 64 geht mit einem Ende in einen Anschlusskasten 66 bzw. über Adern 36 zu der ersten Anschlusseinrichtung 38, und zwar dessen Kontaktringen 50. Die Anschlusseinrichtung 38 bewegt sich mit der Kabeltrommel mit.

Axial entlang der Drehachse 68 der Verstauvorrichtung 60 ist die zweite Anschlusseinrichtung 48 verschiebbar, die mit den Leitungen bzw. Kabeln 42 des Verbindungskabels 44 verbunden ist. Sowohl die erste als auch die zweite Anschlusseinrichtung 38, 48 sind im Innenraum des Trägerkörpers 62 angeordnet. Somit ergibt sich eine wartungsarme Installation.

Der Trägerkörper 62 selbst wird in gewohnter Weise in bzw. entgegen dem Uhrzeigersinn gedreht, je nachdem, ob das Versorgungskabel 64 auf- bzw. abgewickelt werden soll.

Wie bei der Ausführungsform der Fig. 1 und 2 sollten die erste und die zweite Versorgungseinrichtung 38, 48 beabstandet sein, solange die Aufwickeltrommel 60 gedreht wird. Erst bei Stillstand, also wenn das Versorgungskabel 64 im erforderlichen Umfang abgewickelt ist, um z.B. in eine Aufnahme eines Flugzeuges eingesteckt ist, kann die zweite allein axial verstellbare Anschlusseinrichtung 48 in Richtung der ersten Anschlusseinrichtung 38 verschoben werden, um den erforderlichen Kontakt zwischen den Kontaktringen 50 und den Kontaktstiften 56 herzustellen, um Strom und Signale über die Adern 42 des Verbindungskabels zu den Adern 36 des Anschlusskabels 64 fließen zu lassen.

Ohne die Erfindung zu verlassen, kann die Stirnfläche 52 der drehbaren Anschlusseinrichtung 38 von Kontaktstiften und die allein entlang der Drehachse verstellbare Anschlusseinrichtung 48 Kontaktringe aufweisen. Das axiale Verstellen der zweiten Verschlusseinrichtung 48 kann über einen Schalter gesteuert werden. Unabhängig davon ist grundsätzlich vorgesehen, dass die erste und zweite Anschlusseinrichtung 38, 48 dann nicht gegeneinander gedreht werden, wenn sich die Kontakte in elektrisch leitender Verbindung befinden. Auch kann ein Strom erst dann fließen, wenn die erforderliche elektrische Verbindung zwischen den Kontakt 50, 56 vorliegt.

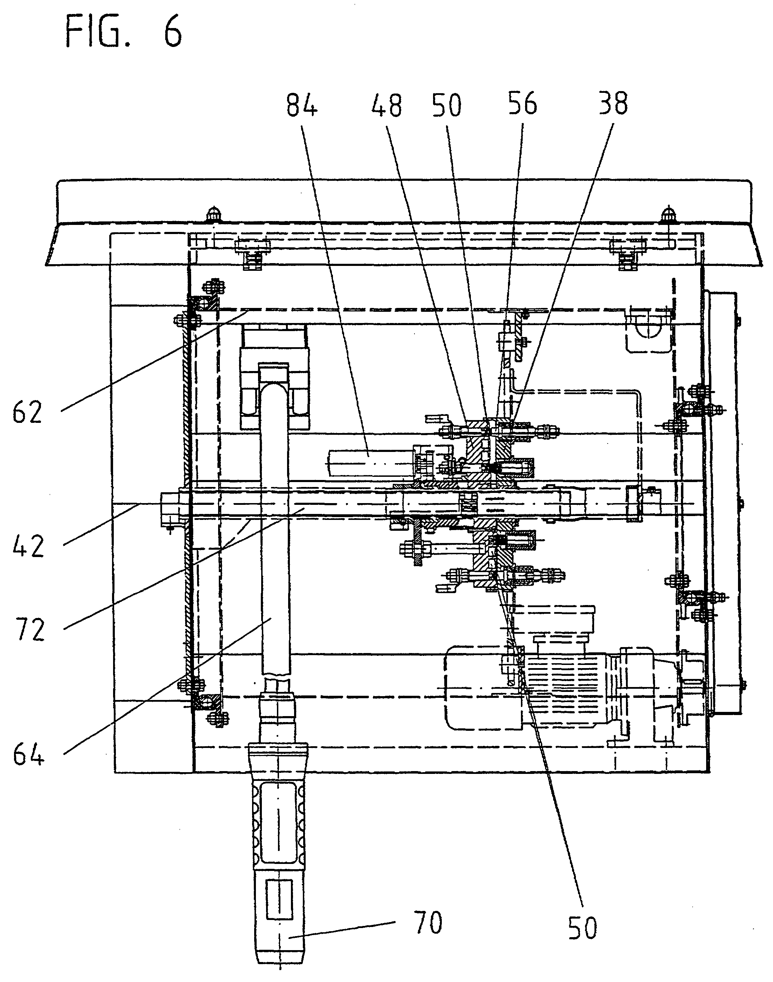

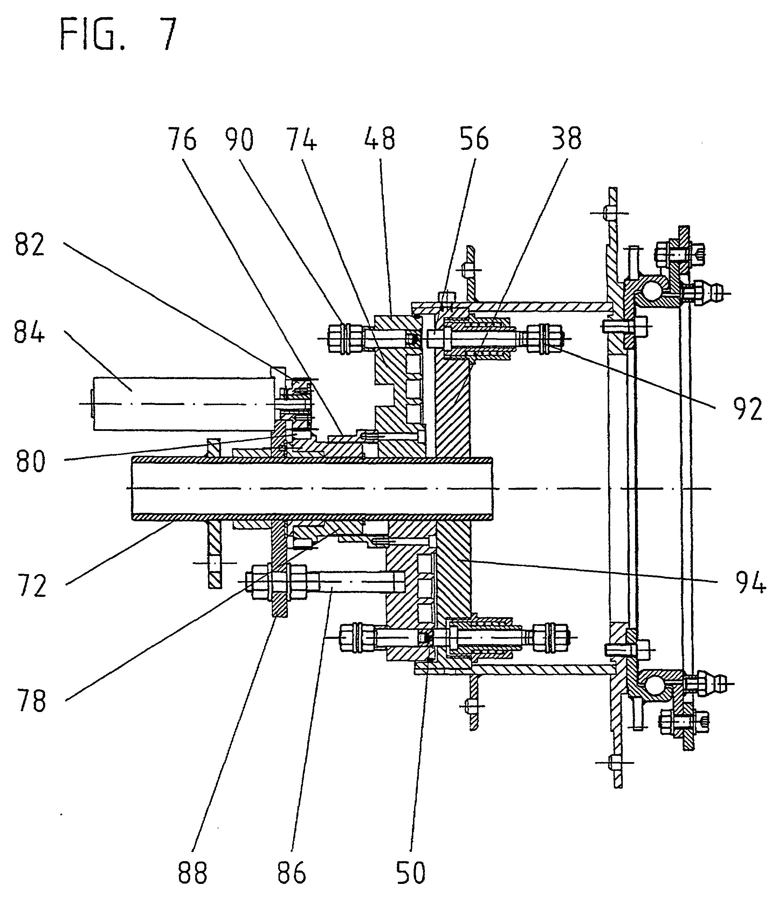

Die Ausführungsformen der Fig. 6 und 7 entsprechen grundsätzlich denen der Fig. 3 bis 5, so dass insoweit für gleiche Elemente gleiche Bezugszeichen benutzt werden. So ist auf einem Trommelkörper 62, der um eine Achse 42 drehbar ist, ein Kabel 64 auf- bzw. abwickelbar, welches an seinem freien Ende einen Stecker wie Pannel 70 aufweist, der z.B. in eine Steckeraufnahme eines Flugzeuges einbringbar ist, um dieses mit Strom bzw. den erforderlichen Signalen zu versorgen. Entlang der Achse 42 erstreckt sich eine Welle 72, entlang der die erste und zweite Anschlusseinrichtung 38, 48 verschiebbar bzw. drehbar sind. Die erste Anschlusseinrichtung 38 ist ortsfest mit dem drehbaren Trommelkörper 42 verbunden und weist im Ausführungsbeispiel federvorgespannte Kontaktstifte 56 auf, die mit koaxial zu diesen angeordneten Kontaktringen 50 dann in Kontakt bringbar sind, wenn die zweite Anschlusseinrichtung 48 entlang der Welle 72 in Richtung der ersten Anschlusseinrichtung 38 verschoben ist.

Wie die Fig. 7 verdeutlicht, verläuft koaxial zur Welle 72 eine von der zweiten einen scheibenförmigen Trägerkörper 74 aufweisenden Anschlusseinrichtung 48 ausgehende Hülse 76, die einen Hohlzylinder 78 umgibt, der seinerseits axial unverschiebbar, jedoch drehbar auf der Welle 72 angeordnet ist. Der Zylinder 78 weist ein Außengewinde und die Hülse 76 ein Innengewinde auf, die ineinandergreifen. Der Hohlzylinder 78 ist umfangsseitig als Zahnscheibe ausgebildet oder weist einen entsprechenden Zahnring 80 auf, der seinerseits mit einem Zahnrad 82 kämmt, welches seinerseits von einem Elektromotor 84 drehbar ist. Wird der Elektromotor 84 betätigt, so erfolgt eine Drehung des Hohlzylinders 80 mit der Folge, dass die Hülse 76 und damit der scheibenförmige Träger 74 der zweiten Anschlusseinrichtung 48 entlang der Welle 72 verschoben wird. Dabei erfolgt eine ausschließlich translatorische Bewegung, da die scheibenförmige Halterung 74 drehgesichert ist. Dies kann z.B. durch einen Bolzen oder durch einen Stab 86 erfolgen, der von dem Träger 74 ausgeht und ein Scheibenelement 88 durchsetzt, das seinerseits ortsfest mit der Welle 72 verbunden ist und gleichzeitig als Halterung für den Elektromotor 84 dienen kann.

Die Kontaktstifte 56 sind erwähntermaßen federvorgespannt, um einen hinreichend elektrisch leitenden Kontakt zu den zur Obefläche der scheibenförmigen Halterung 74 zurückversetzten Kontaktringen 50 der zweiten Anschlußeinrichtung 48 sicherzustellen, die ihrerseits über Anschlüsse 90 mit nicht dargestellten Kabeln bzw. Leitungen einer stationären Versorgungsanlage verbindbar sind. Entsprechend sind die Kontaktstifte 56 über Anschlüsse 92 mit den Adern des Kabels 64 verbindbar. Selbstverständlich besteht ohne Weiteres die Möglichkeit, Kontaktstifte und Kontaktringe auszutauschen.

Als Materialien für die Kontaktstifte bzw. Kontaktringe können bekannte für elektrisch leitende Verbindungen verwendete Legierungen verwendet werden, die zumindest einen Kohlenstoffanteil aufweisen sollten, um ein Gleiten der Kontaktstifte auf den Gleitringen zu ermöglichen bzw. einen unerwünschten Abrieb zu verhindern, wenn die Kontaktstifte auf den Kontaktringen gleiten; denn bei Kontakt der Kontaktstifte und Gleitringe kann ohne weiteres ein weiteres Drehen der Trommel und damit der ersten Anschlusseinrichtung 38 erfolgen.

Die erste Anschlusseinrichtung 38 weist ebenfalls einen scheibenförmigen Trägerkörper 94 auf, wie dies in Bezug auf die zweite Anschlusseinrichtung 48 der Fall ist.

## Patentansprüche

1. Vorrichtung (14) zur Aufnahme bzw. zum Verstauen eines mehrere Adern (36) umfassenden Kabels (16, 64) mit einer um eine Achse (30, 38) drehbare Aufwickeltrommel (18, 60) zur Aufnahme des Kabels, dessen Adern mit einer ersten Anschlusseinrichtung (38) verbunden sind, über die ein elektrisch leitender Anschluss zu Leitungen einer Versorgungsanlage erfolgt und die mit der Aufwickeltrommel (18, 60) verbunden ist und auf koaxial zur Trommelachse (30, 66) verlaufenden Kreisen angeordnete, mit den Adern (36) des Kabels (16, 64) verbundene erste elektrische Kontakte (50, 56) aufweist, wobei die zur Versorgungsanlage führenden elektrischen Leitungen (42) mit einer zweiten Anschlusseinrichtung (48) verbunden ist, die zweite elektrische Kontakte (56, 50) aufweist, die bei stillstehender Aufwickeltrommel (18, 60) mit den ersten elektrisch leitenden Kontakten (50, 56) in elektrisch leitender Verbindung sind,
**dadurch gekennzeichnet,**
**dass** die zweite elektrische Anschlusseinrichtung (48) bei sich drehender Aufwickeltrommel (18, 60) axial entlang der Trommelachse (30, 36) verschoben im Abstand zu der ersten elektrischen Anschlusseinrichtung (38) bei voneinander getrennten ersten und zweiten elektrischen Kontakten verläuft und dass die zweite Anschlusseinrichtung (38) nach dem Stillstand der Aufwickeltrommel (18, 60) in Richtung der ersten Anschlussvorrichtung (48) verschiebbar ist.

2. Vorrichtung nach Anspruch 1,
**dadurch gekennzeichnet,**
**dass** bei stillstehender Trommel (18, 60) die zweite elektrische Anschlusseinrichtung (48) mittels zum Beispiel eines Spindelantriebs oder eines Hubmagneten in Richtung der mit der Trommel verbundenen ersten elektrischen Anschlusseinrichtung (38) verschiebbar ist.

3. Vorrichtung nach Anspruch 1 oder 2,
**dadurch gekennzeichnet,**
**dass** bei in elektrisch leitender Verbindung stehenden ersten und zweiten elektrischen Kontakten (50, 58) die zweite elektrische Anschlusseinrichtung (48) vorzugsweise mittels einer Spindel selbsthemmend gehalten ist.

4. Vorrichtung nach zumindest einem der vorhergehenden Ansprüche,
**dadurch gekennzeichnet,**
**dass** die Trommel (60) einen hohlzylindrischen Trägerkörper (62) für das auf- bzw. abzuwickelnde Kabel (64) aufweist, innerhalb dessen die zweite elektrische Anschlusseinrichtung (48) verschiebbar angeordnet ist.

5. Vorrichtung nach zumindest einem der vorhergehenden Ansprüche,
**dadurch gekennzeichnet,**
**dass** die erste elektrische Anschlusseinrichtung (38) senkrecht von einer von dem Kabel aufgespannten Ebene abragt und sich entlang der Drehachse (30) der Trommel (18) in einer ortsfesten Halterung wie domartigem Aufsatz (28) drehbar erstreckt, innerhalb der bzw. dem die zweite elektrische Anschlusseinrichtung (48) axial verschiebbar angeordnet ist.

6. Vorrichtung nach zumindest einem der vorhergehenden Ansprüche,
**dadurch gekennzeichnet,**
**dass** die ersten oder zweiten elektrischen Kontakte Kontaktstifte (56) und die zweiten oder ersten elektrischen Kontakte Kontaktringe (50) sind.

7. Vorrichtung nach zumindest Anspruch 6,
**dadurch gekennzeichnet,**
**dass** die Kontaktstifte (56) federvorgespannte Stifte, insbesondere spezialbeschichtet sind.

8. Vorrichtung nach zumindest einem der vorhergehenden Ansprüche,
**dadurch gekennzeichnet,**
**dass** beim Kontaktieren bzw. Trennen der ersten und zweiten Kontakte (50, 56) die zweite elektrische Anschlusseinrichtung (48) spannungsfrei ist.

9. Vorrichtung nach zumindest einem der vorhergehenden Ansprüche,
**dadurch gekennzeichnet,**
**dass** die erste und/oder zweite elektrische Anschlusseinrichtung (38, 48) ein aus Isoliermaterial bestehendes, vorzugsweise eine Zylinderform aufweisendes Gehäuse umfasst, dessen Frontfläche (52, 58) die ersten bzw. zweiten elektrischen Kontakte (50, 56) aufweist bzw. von diesen durchsetzt ist.

10. Vorrichtung nach zumindest einem der vorhergehenden Ansprüche,
**dadurch gekennzeichnet,**
**dass** die Kontaktringe (50) zurückversetzt zur Oberfäche der Stirnfläche (52) verlaufen und durch Stege (54) zueinander beabstandet sind, die ihrerseits außenrandseitig angefast sind.

11. Vorrichtung nach zumindest einem der vorhergehenden Ansprüche,
**dadurch gekennzeichnet,**
**dass** zumindest einem ersten und/oder einem zweiten elektrischen Kontakt (50, 56) ein Sensor wie Schalter zur Überprüfung des Kontaktes zwischen den ersten und zweiten elektrischen Kontakten zugeordnet ist.

12. Vorrichtung nach zumindest einem der vorhergehenden Ansprüche,
**dadurch gekennzeichnet,**
**dass** der Sensor ein Kontaktschalter ist, der von einer der Frontflächen ausgeht und durch ein Gegenelement der anderen Frontfläche betätigbar ist.

13. Vorrichtung nach zumindest einem der vorhergehenden Ansprüche,
**dadurch gekennzeichnet,**
**dass** die axiale Verstellung der zweiten Anschlusseinrichtung (48) über zumindest einen Endschalter steuerbar ist.

14. Vorrichtung nach zumindest einem der vorhergehenden Ansprüche,
**dadurch gekennzeichnet,**
**dass** die axiale Verstellung der zweiten Anschlusseinrichtung (48) mittels eines Elektromotors (84) sowie ineinandergreifender Innen- und Außengewinde erfolgt, die einerseits von einer von einer scheibenartigen Halterung (74) der zweiten elektrischen Anschlusseinrichtung (48) ausgehenden Hülse (76) und andererseits von einem axial unverschiebbar auf einer entlang der Achse verlaufenden Welle (72) angeordneten Hohlzylinderelement (78) ausgehen, das von dem Elektromotor drehbar ist.

## Claims

1. Device (14) for taking up or stowing of a cable (16, 64) comprising several leads (36) with a take-up drum (18, 60) rotatable about an axis (30, 38) for taking up of the cable, the leads of which are connected to a first connection device (38), via which an electrically conductive connection is provided to lines of a supply system and which is connected to the take-up drum (18, 60), and having first electrical contacts (50, 56) which are arranged on circles running coaxially to the drum axis, connected to the leads (36) of the cable (16, 64), and the electrical lines (42) leading to the supply system are connected to a second connection device (48) that has second electrical contacts (56, 50) making an electrically conductive connection with the first electrically conductive contacts (50, 56) when the take-up drum (18, 60) comes to a standstill,
**characterised in that**
the second electrical connection device (48) is displaced along the drum axis (30, 36) at a distance to the first electrical connection device (38) and the first and second electrical contacts are separated from each other when the take-up drum (18, 60) is rotating and that the second connection device (38) can be moved in the direction of the first electrical connection device after the take-up drum (18, 60) has come to a standstill.

2. Device according to Claim 1,
**characterised in that**
when the drum (18, 60) has stopped, the second electrical connection device (48) is movable in the direction of the first electrical connection device (38) connected to the drum by means of, for example, a spindle drive or a lifting magnet.

3. Device according to Claim 1 or 2,
**characterised in that**
when the first and second contacts (50, 58) have an electrically conductive connection, the second electrical connection device (48) is preferably held by self-locking by means of a spindle.

4. Device according to at least one of the preceding Claims,
**characterised in that**
the drum (60) has a hollow-cylindrical carrier element (62) for the cable (64) to be wounded and unwounded, respectively, inside which carrier element the second electrical connection device (48) is movably arranged.

5. Device according to at least one of the preceding Claims,
**characterised in that**
the first electrical connection device (38) projects vertically from a plane formed by the cable and extends rotatably along the rotary axis (30) of the drum (18) inside a stationary holder such as a dome-shaped cap (28), inside which the second electrical connection device (48) is arranged axially movable.

6. Device according to at least one of the preceding Claims,
**characterised in that**
the first or second electrical contacts are contact pins (56) and the second or first electrical contacts are contact rings (50).

7. Device according to at least Claim 6,
**characterised in that**
the contact pins (56) are spring-biased pins being in particular special coated.

8. Device according to at least one of the preceding Claims,
**characterised in that**
during contact or separation of the first and second contacts (50, 56) the second electrical connection device (48) is voltage-free.

9. Device according to at least one of the preceding Claims.
**characterised in that**
the first and/ or second electrical connection device (38, 48) comprises a preferably cylindrical housing made of insulating material and the front face (52, 58) of said housing has or is passed through by the first or second electrical contacts (50, 56).

10. Device according to at least one of the preceding Claims,
**characterised in that**
the contact rings (50) run removed backwards to the surface of the front face (52) and are kept in distance to each other by webs (54) which in turn are chamfered on their outer edges.

11. Device according to at least one of the preceding Claims,
**characterised in that**
a sensor such as a switch is assigned to at least one first and/ or second electrical contact (50, 56) in order to check the contact between the first and second electrical contacts.

12. Device according to at least one of the preceding Claims,
**characterised in that**
the sensor is a contact switch extending from one of the front faces and actuatable by a mating element of the other front face.

13. Device according to at least one of the preceding Claims,
**characterised in that**
the axial adjustment of the second connection device (48) is controllable using at least one limit switch.

14. Device according to at least one of the preceding Claims,
**characterised in that**
the axial adjustment of the second connection device (48) is achieved by means of an electric motor (84) and engaging internal and external threads provided on the one hand on a sleeve (76) extending from a disk-like holder element (74) of the second electrical connection device (48) and on the other hand on a hollow cylinder element (78) rotatable by an electric motor and arranged axially unmovable on a shaft (72) running along the axis.

## Revendications

1. Dispositif (14) pour recevoir et/ou loger un câble (16, 64) à plusieurs brins (36) sur un touret d'enroulement (18, 60) rotatif autour d'un axe (30, 38) pour la réception du câble, dont les brins sont reliés à une première installation de raccordement (38) qui établit une liaison électrique conductrice avec les lignes d'un poste de distribution électrique, qui est reliée au touret d'enroulement (18, 60) et qui comporte des premiers contacts électriques (50, 56) disposés en cercles coaxiaux à l'axe (30, 66) du touret et reliés aux brins (36) du câble (16, 64), les lignes électriques (42) conduisant au poste de distribution étant reliées à une seconde installation de raccordement (48) comportant des seconds contacts électriques (56, 50), se trouvant en liaison électrique avec les premiers contacts électriques (50, 56), en position d'arrêt du touret d'enroulement (18, 60),
**caractérisé en ce que**
lorsque le touret d'enroulement (18, 60) tourne, la seconde installation de raccordement (48) se déplace axialement le long de l'axe du touret (30, 36), à distance de la première installation de raccordement électrique (38), en séparant les premiers et seconds contacts électriques les uns des autres, et après l'arrêt du touret d'enroulement (18, 60), la seconde installation de raccordement (48) peut se déplacer en direction de la première installation de raccordement (38).

2. Dispositif selon la revendication 1,
**caractérisé en ce que**
le touret (18, 60) étant à l'arrêt, la seconde installation de raccordement électrique (48) peut se déplacer en direction de la première installation de raccordement électrique (38) reliée au touret, au moyen, par exemple, d'une commande à broche ou d'un électroaimant

3. Dispositif selon la revendication 1 ou 2,
**caractérisé en ce que**
lorsque les premiers et secondes contacts électriques (50, 58) sont reliés électriquement, la seconde installation de raccordement électrique (48) est maintenue automatiquement serrée, de préférence au moyen d'une broche.

4. Dispositif selon au moins l'une des revendications précédentes,
**caractérisé en ce que**
le touret (60) comporte un support cylindrique creux (62) pour l'enroulement et le déroulement du câble (64), à l'intérieur duquel la seconde installation de raccordement électrique (48) peut coulisser.

5. Dispositif selon au moins l'une des revendications précédentes,
**caractérisé en ce que**
la première installation de raccordement électrique (38) dépasse verticalement du plan de tension du câble et s'étend, le long de l'axe de rotation (30) du touret (18) en pouvant tourner dans un élément de blocage fixe tel qu'un chapeau en forme de dôme (28), à l'intérieur duquel la seconde installation de raccordement électrique (48) peut coulisser axialement.

6. Dispositif selon au moins l'une des revendications précédentes,
**caractérisé en ce que**
les premiers ou seconds contacts électriques sont des fiches de contact (56) et les secondes ou premiers contacts électriques sont des bagues de contact (50).

7. Dispositif selon la revendication 6,
**caractérisé en ce que**
les fiches de contact (56) sont des fiches tendues par ressort, et avec revêtement spécial.

8. Dispositif selon au moins l'une des revendications précédentes,
**caractérisé en ce que**
lors de la mise en contact et/ou de la séparation des premiers et des seconds contacts (50 ,56), la seconde installation de raccordement électrique (48) est hors tension.

9. Dispositif selon au moins l'une des revendications précédentes,
**caractérisé en ce que**
les premières et/ou la seconde installation de raccordement électrique (38, 48) comprennent un boîtier en matière isolante, de préférence cylindrique, dont les faces frontales (52, 58) comportent ou sont traversées par eux les premiers et/ou seconds contacts électriques (50, 56).

10. Dispositif selon au moins l'une des revendications précédentes,
**caractérisé en ce que**
les bagues (50) sont décalées en retrait la surface de la face frontale (52), et maintenues écartées les unes des autres par des nervures (54) constituant elles-mêmes des rebords extérieurs.

11. Dispositif selon au moins l'une des revendications précédentes,
**caractérisé en ce qu'**
un palpeur, tel qu'un relais, est prévu pour vérifier le contact entre les premiers et les seconds contacts électriques (50, 56).

12. Dispositif selon au moins l'une des revendications précédentes,
**caractérisé en ce que**
le palpeur est un relais à contact dépassant de l'une des faces frontales et actionné par un élément opposé de l'autre face frontale.

13. Dispositif selon au moins l'une des revendications précédentes,
**caractérisé en ce que**
le réglage axial de la seconde installation de raccordement (48) est contrôlée par au moins un interrupteur de fin de course.

14. Dispositif selon au moins l'une des revendications précédentes,
**caractérisé en ce que**
le réglage axial de la seconde installation de raccordement (48) est assuré par un moteur électrique (84) ainsi que par un filetage intérieur et extérieur pénétrant l'un dans l'autre, qui partent, d'une part d'un manchon (76) ressortant d'un élément de blocage en forme de disque (74) de la seconde installation de raccordement électrique (48) et d'autre part d'un élément cylindrique creux (78) ne pouvant se déplacer en direction axiale, et monté sur un arbre (72) le long de l'axe.
